# EUROPÄISCHE PATENTANMELDUNG

(11) **EP 4 434 814 A1**
(43) Veröffentlichungstag der Anmeldung: **25.09.2024**
(21) Anmeldenummer: 24163405.4
(22) Anmeldetag: 14.03.2024
(51) Int. Cl.: B60Q 1/26

(54) **LEUCHTENTRÄGER**

(30) Priorität: 20.03.2023 DE 102023106926
(71) Anmelder: Lemken GmbH & Co. KG, 46519 Alpen (DE)
(72) Erfinder: Dals, Alexander, 48653 Coesfeld (DE); Beier, Carsten, 33154 Salzkotten (DE)

(57) **Zusammenfassung**

Die Erfindung schlägt einen Leuchtenträger (2) vor, bei welchem ein Leuchtenhalter (6) vorzugsweise vormontiert auf ein von einem Arbeitsgerät (1) oder Fahrzeug abstehenden, profilförmigen Tragarm (3) aufgeschoben und kraftschlüssig befestigt werden kann, wobei durch Verwendung eines Klemmmittels (9), welches zwischen dem Tragarm (3) und dem Leuchtenhalter (6) angeordnet ist und durch Zustellung eines Stellmittels (10) entlang der Tragarmachse (5) derart verformt wird, dass eine zur Tragarmachse (5) radiale Klemmkraft entsteht, welche zwischen Tragarm (3) und dem Leuchtenhalter (6) eine Kraftschlussverbindung erzeugt.

## Beschreibung

### Die Erfindung betrifft einen Leuchtenträger gemäß dem Oberbegriff des

Patentanspruches 1.

Landwirtschaftliche Arbeitsgeräte, Fahrzeuge oder Maschinen werden meist durch Traktoren im Straßenverkehr bewegt. Durch die Abmessungen der Arbeitsgeräte werden oft die Begrenzungsleuchten des Traktors verdeckt, so dass eine separate Kenntlichmachung der Arbeitsgeräte im öffentlichen Straßenverkehr erforderlich ist. Aus der Vergangenheit sind auf ein Winkelprofil des Arbeitsgerätes aufsteckbare Beleuchtungseinheiten bekannt, welche, wie in DE 7 702 796 U1 beschrieben, meist mit zusätzlichen Warntafeln ausgestattet sind. Aus DE 8 708 758 U1 und DE 3 938 997A1 sind Anordnungen mit Teleskoprohren bekannt, um die Außenbreite der Leuchten und Warntafeln vorschriftskonform einzustellen. Den Leuchtenträgern aus dem Stand der Technik ist gemein, dass diese mit den Trag- oder Teleskoprohren aufwendig verschraubt werden oder deren Kabelführung außen auf den Rohren ungeschützt verlegt werden.

Durch die Verschraubung werden zudem Erschütterungen, wie sie im Betrieb der Arbeitsgeräte auftreten, auf die Leuchten und Warntafeln übertragen und beeinflussen deren Haltbarkeit oder Leuchtdauer negativ.

Aufgabe der Erfindung ist es, einen Leuchtenträger bereit zu stellen, welcher vormontiert auf ein von dem Arbeitsgerät abstehenden, profilförmigen Tragarm aufgeschoben und kraftschlüssig befestigt werden kann.

Diese Aufgabe wird durch die Merkmale des kennzeichnenden Teiles des Anspruches 1 gelöst.

Ein Leuchtenträger, insbesondere für landwirtschaftliche Fahrzeuge oder Geräte, weist zumindest einen Tragarm mit zumindest einer Querschnittsebene und einer Tragarmachse auf. Die Querschnittsebene steht senkrecht zur Tragarmachse. Weiterhin enthält der Leuchtenträger zumindest einen Leuchtenhalter, welcher vorzugsweise zur Aufnahme einer oder mehrerer Leuchten und/oder Warntafeln ausgebildet ist. Der Leuchtenhalter ist mit dem Tragarm mittels zumindest eines Klemmmittels verbunden, wobei am Klemmmittel mittels zumindest eines Stellmittels eine Klemmkraft aufgebracht werden kann.

Dabei ist die Klemmkraft des Klemmmittels im Wesentlichen innerhalb der oder parallel zur Querschnittsebene wirkend ausgerichtet. Dies bedeutet, dass die Klemmkraft radial zur Tragarmachse wirkt. Wesentlich dabei umfasst der Wirkwinkel der Klemmkraft zur Tragarmachse einen Winkel von vorzugsweise 45 - 90 Grad. Die Klemmkraft kann sich als Resultierende aus einer Vielzahl einzelner, auch schräg gerichteter Teilkräfte bilden. Die Klemmkraft des Klemmmittels wird dadurch erzeugt, dass die Zustellung des Stellmittels koaxial oder parallel zur Tragarmachse oder senkrecht zur Querschnittsebene erfolgt. Durch die Zustellung des Stellmittels, welches mit dem Klemmmittel in Verbindung steht, wird das Klemmmittel verformt oder Flächen des Klemmmittels verschoben. Hierdurch bildet das Klemmmittel gemeinsam mit dem Leuchtenhalter sowie dem Tragarm eine kraftschlüssige Verbindung.

Vorzugsweise ist der Tragarm als Hohlprofil ausgebildet. Dies spart Gewicht und Kosten. Weiterhin kann das Klemmmittel in das Hohlprofil eingeschoben werden und mit der Wandung eine Kraftschlussverbindung aufbauen. Zudem können Leitungen und Kabel geschützt innerhalb des Hohlprofiles verlegt oder angeordnet werden.

Insbesondere ist der Tragarm als Rund-, Polygon oder Vieleckprofil ausgebildet. Dies ermöglicht auf einfache Weise ein Schwenken des Leuchtenhalters, um dessen Neigung relativ zur Bodenoberfläche einzustellen. Nach Erreichen der gewünschten Lage kann durch Verspannen des Klemmmittels durch das Zustellmittel die Position des Leuchtenhalters relativ zum Tragarm kraftschlüssig arretiert werden.

Vorzugsweise ist das Klemmmittel ein- oder mehrteilig, insbesondere als Spreizkörper oder als Klemmhülse ausgebildet. Ein einteiliges Klemmmittel kann durch Einwirkung des Stellmittels zumindest von seiner Erstreckungsachse, welche parallel zur Tragarmachse läuft, in radialer Richtung verformt werden. Ein mehrteiliges Klemmmittel kann Schrägen oder Konusflächen aufweisen, welche direkt mit dem Stellmittel oder weiteren Hilfsmitteln zum Erreichen einer Stellbewegung zusammenwirken. Die Hilfsmittel können dem Stellmittel und/oder dem Klemmmittel zugeordnet sein.

In erfinderischer Weise ist das Klemmmittel plastisch oder elastisch ausgebildet. Dabei ist dies mit elastisch verformbaren Teilen versehen oder als solches ausgebildet. Insbesondere empfehlen sich dauerelastische Werkstoffe wie beispielsweise Gummi oder Elastomere, wodurch ein mehrfaches Lösen und Befestigen des Leuchtenhalters am Tragarm gewährleistet ist.

In einer stabilen Bauweise der Erfindung ist dem Tragarm und dem Leuchtenhalter an einer von dem Klemmmittel entfernten Position eine weitere Fixierung zugeordnet. Diese Fixierung ist vorzugsweise in Richtung der Tragarmachse beabstandet und ermöglicht eine weitere Führung des Leuchtenhalters relativ zum Tragprofil, zumindest in radialer Richtung relativ zur Tragarmachse.

In erfinderischer Weise ist das Stellmittel als Schub- oder Zuganker ausgebildet. Dabei kann das Stellmittel mit einem Spreiz- oder Gewindeabschnitt versehen werden, welcher in das Klemmmittel eindringt oder zumindest auf eine endseitige Fläche des Klemmmittels einwirkt. Dabei wirkt das Stellmittel in seiner Stellrichtung mit einer Stützfläche des Leuchtenhalters zumindest mittelbar kraft- oder formschlüssig zusammen.

In einer weiteren Erfindungsform ist das Stellmittel als Überwurfmutter oder Klemmkonus ausgebildet. Diese ist dafür geeignet, das Klemmmittel auf der Außenwandung des Tragprofiles anzuordnen. Durch die radial größere Bauweise des Klemmmittels kann dieses in Richtung der Tragarmachse kürzer ausgebildet sein. Durch die axiale Zustellung des Stellmittels wird das Klemmmittel relativ zur Außenwandung des Tragprofiles sowie radial zur Tragarmachse verpresst. Dabei weist das Stellmittel eine Kraft- oder Formschlussverbindung mit dem Leuchtenhalter auf. Weiterhin kann das Klemmmittel integraler Bestandteil des Leuchtenträgers sein, wenn dieser zumindest abschnittweise plastisch oder elastisch ausgebildet ist.

Insbesondere weist das Klemmmittel stirnseitig eine Bund- oder Flanschfläche auf, welche mit dem Leuchtenhalter und/oder dem Tragarm kraft- oder formschlüssig zusammenwirkend ausgebildet ist. Während die Klemmkraft des Klemmmittels hauptsächlich radial zur Tragarmachse aufgebracht wird, kann durch Zustellung des Stellmittels ein weiterer Reibschluss zwischen der Bund- oder Flanschfläche des Klemmmittels aufgebracht werden oder eine weitere unterstützende Reibschlussverbindung zwischen Klemmmittel und einer endseitigen Stirnfläche des Tragarmes.

Ergänzend kann das Klemmmittel mit Formschlusselementen versehen werden, welche mit dem Leuchtenhalter und/oder dem Tragarm zumindest mittelbar zusammenwirkend als Formschlussverbindung ausgebildet sind. Vorzugsweise wirkt die Formschlussverbindung entweder zwischen Leuchtenhalter und Klemmmittel oder zwischen Klemmmittel und Tragarm, um eine Einstellbarkeit des Leuchtenhalters im Winkel zum Boden zu erhalten. Alternativ kann eine beidseitige Formschlussverbindung erfolgen, wenn die Formschlusselemente durch eine Mehrzahl von Rastpositionen, wie beispielsweise eine Verzahnung, eine Winkeleinstellung ermöglichen.

In einer weiteren Erfindungsform weist das Klemmmittel eine oder mehrere Ausnehmungen zur Aufnahme und/oder Durchführung von Leitungen, insbesondere von Kabeln, auf. Dies ist bei Verwendung von Hohlprofilen als Tragarm bei einer endseitigen Leitungs- oder Kabelausführung aus den Hohlprofilen von Vorteil, um Ausnehmungen im Hohlprofil, welche dessen Stabilität beinträchtigen können, zu vermeiden.

Die Erfindung zeichnet sich insbesondere dadurch aus, dass durch Verwendung eines Klemmmittels, welches zwischen einem Tragarm und einem Leuchtenhalter angeordnet ist und durch Zustellung eines Stellmittels entlang der Tragarmachse derart verformt wird, dass eine zur Tragarmachse radiale Klemmkraft entsteht, welche zwischen Tragarm und einem Leuchtenhalter eine Kraftschlussverbindung erzeugt. Somit können diese auf einfachste Weise in ihrer Winkellage zueinander eingestellt und lösbar miteinander verbunden werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig. 1: ein landwirtschaftliches Gerät mit einer Beleuchtungsanlage in einer Perspektive,
- Fig. 2: einen Leuchtenträger in Perpektive von schräg hinten,
- Fig. 3: eine Querschnittsdarstellung des Leuchtenträgers,
- Fig. 4: eine Einzelheit aus Figur 3,
- Fig. 5: eine Perspektive eines Leuchtenhalters mit Einzelteilen,

- Fig. 6 und Fig. 7: eine Perspektive eines weiteren Leuchtenhalters,
- Fig. 8 und Fig. 9: Einzelheiten einer Leitungsführung,
- Fig. 10: eine Perspektive eines Leuchtenhalters mit einer alternativen Befestigung und
- Fig. 11: eine andere Perspektive aus Fig 10 im Querschnitt.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

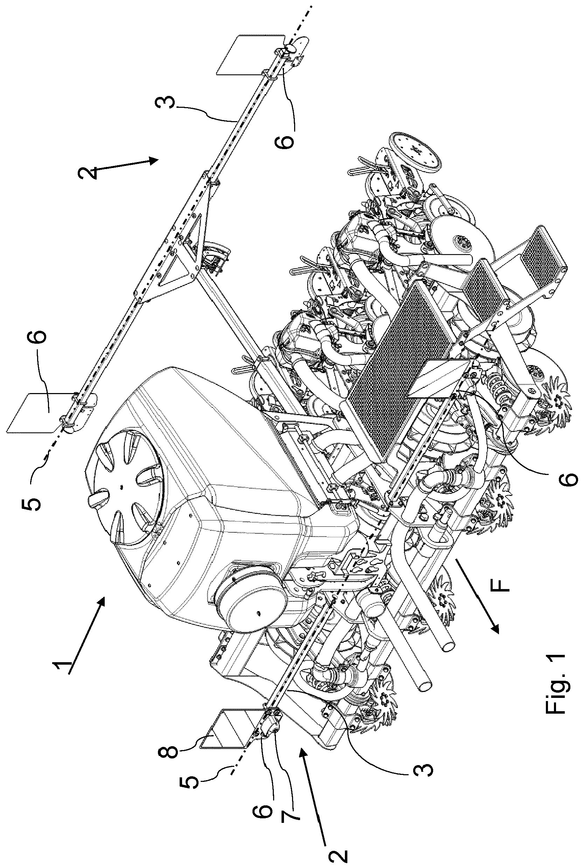

Figur 1 zeigt ein landwirtschaftliches Gerät 1, welches zum Anbau oder zur Anhängung an ein nicht dargestelltes Fahrzeug, beispielsweise einen Traktor, vorgesehen ist. Ebenso kann das landwirtschaftliche Gerät 1 eine selbstfahrende Arbeitsmaschine sein. Umfasst sind weiter Geräte oder Fahrzeuge zum Transport vorzugsweise landwirtschaftlicher Güter, deren Breite oder Überbreite im Straßenverkehr kenntlich gemacht werden muss. Exemplarisch ist hier eine Einzelkornsämaschine mit etwa 3 Metern Transportbreite dargestellt.

Zumindest an einer Vorder- oder Rückseite, in Fahrtrichtung F gesehen, und vorzugsweise im äußeren Bereich, welcher die Transportbreite definiert, sind einer oder mehrere Leuchtenträger 2 angebracht. Auch andere Anbaupositionen sind möglich. Die Leuchtenträger 2 könen ein- oder mehrteilig ausgeführt sein und weisen zumindest einen Tragarm 3 und einen Leuchtenhalter 6 auf. An einem Leuchtenhalter 6 sind zumindest eine Leuchte 7 und / oder eine Warntafel 8 angebracht. Als Leuchte 7 versteht sich jedwede Art von Signalgebern, insbesondere optischer und / oder akustischer Art oder Kombinationen verschiedener Signalgeber. Eine Warntafel 8 kann als Warn- oder Anzeigetafel, mit passiven oder aktiven Anzeige- oder Warnelementen ausgebildet sein. Als Anzeige- oder Warnelemente sind insbesondere reflektierende, flächige Elemente (passiv) vorgesehen, gleichwohl können auch oder alternativ aktive Anzeigeelemente wie LED-, OLED- oder LCD-Displays zur Anzeige von austauchbaren Anzeigemustern und-Farben, Warn- oder Informationshinweisen verwendet werden.

Die Leuchtenhalter 6 sind jeweils endseitig an einem Tragarm 3 angeordnet. Zumindest hier verläuft eine Tragarm-Achse 5, vorzugsweise eine Mittel- oder Symmetrieachse des Profils des Tragarmes 3 entlang seiner Haupterstreckungsrichtung, welche vorzugsweise quer zur Fahrtrichtung F verläuft.

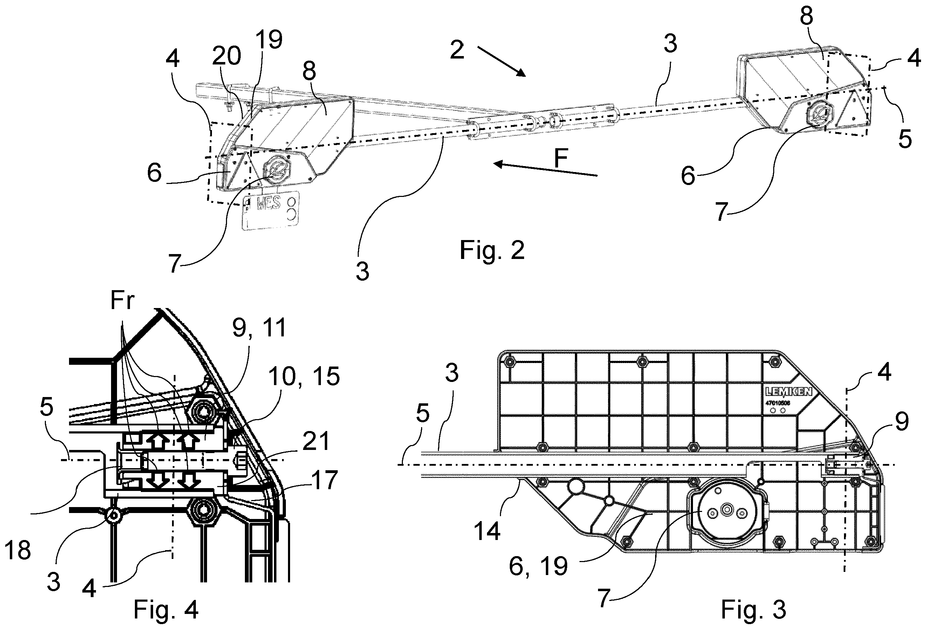

Figur 2 zeigt eine Ansicht eines Leuchtenträgers 2 mit Tragarmen 3 und Leuchtenhaltern 6. Die Leuchtenhalter 6 sind hier exemplarisch als großflächige Formteile ausgebildet, welche aus zwei aneinander geflanschten Gehäusehälften 19, 20 bestehen. Diese sind hier als Formteile ausgebildet. In Fahrtrichtung F gesehen sind reflektierende Warntafeln 8 sowie eine Leuchte 7 am Leuchtenhalter 6 angeordnet. Weiterhin ist die Befestigung weiterer Rückstrahler sowie eines Fahrzeugkennzeichens am Leuchtenhalter 6, wie dargestellt, möglich. Die Leuchtenhalter 6 können mit den vorgenannten Komponenten insbesondere steckerfertig vormontiert und später auf den Tragarm 3 aufgeschoben und dort verklemmt werden. Der Klemmbereich befindet sich im Bereich einer Querschnittsebene 4, welche etwa senkrecht zur Tragarmachse 5 des Tragarmes 3 und/oder parallel zur Fahrtrichtung F verläuft. Vorzugsweise steht die Querschnittsebene 4 zudem senkrecht zur Bodenoberfläche.

Figur 3 zeigt einen durch die Tragarmachse 5 verlaufenden Querschnitt des Leuchtenhalters 6, welcher im vorliegenden Fall aus zwei Gehäusehälften 19, 20 besteht, wovon eine Innenseite der Gehäusehälfte 19 sowie einen Teil des Tragarmes 3 mit seiner Tragarmachse 5 dargestellt ist. Ebenfalls ist das Gehäuse einer Leuchte 7 zu sehen. Im Bereich der Querschnittsebene 4 ist der Klemmbereich mit einem Klemmmittel 9 dargestellt, welcher im Einzelnen in Figur 4 hervorgehoben und folgend beschrieben wird. Auf der gegenüberliegenden Seite tritt der Tragarm aus dem Leuchtenhalters 6 aus. Die Austrittsöffnung bildet zugleich eine weitere Fixierung 14, mit welchem der Leuchtenhalter 6 gegen radiale Bewegung relativ zum Tragrohr gesichert ist.

In den als Rohrprofil ausgebildeten Tragarm 3 erstreckt sich in dessen Innenraum das Klemmmittel 9, welches als plastisch oder elastisch verformbarer Spreizkörper 11 ausgebildet ist. Der Spreizkörper 11 ist endseits des Tragarmes 3 mit einem Bund 21 versehen, welcher ein weiteres Einschieben in den Tragarm 3 verhindert. Zugleich bildet der Bund 21 eine Reibschlussverbindung mit einer Haltelasche 17, welche formschlüssig mit dem Leuchtenhalter 6 verbunden ist und dessen Verbindung zum Klemmmittel 9 schafft.

Das Klemmmittel 9 bzw. der Spreizkörper 11 weist eine innere Ausnehmung oder Bohrung auf, in welche sich das Stellmittel 10 erstreckt. Das Stellmittel 10 ist hier als Zuganker 15 und korrespondierender Gegenhalter 18 ausgebildet. Der Zuganker 15 wirkt mit dem Gegenhalter 18 zusammen, indem der Zuganker 15 als auch der Gegenhalter 18 mit einem Innen- bzw. Außengewinde, vorzugsweise als Schrauben- / Mutterverbindung, versehen sind. Durch Einschrauben des Zugankers 15 in den Gegenhalter 18 und somit einer axialen Zustellung entlang der Tragarmachse 5 entsteht eine Stauchung oder Verpressung des Spreizkörpers 11, welcher radial zur Tragarmachse 5 beziehungsweise innerhalb oder parallel zur Querschnittsebene 4 eine Klemmkraft Fr (als Pfeile dargestellt) erzeugt, welche einen Reibschluss zwischen der Innenwandung des Tragarmes 3 sowie dem Spreizkörper 11 erzeugt und eine translatorische und rotatorische Bewegung des Klemmmittels 9 im Tragarm 3 bzw. zwischen Leuchtenhalter 6 und Tragarm 3 verhindert.

Nach Lösen des Zugankers 15 wird der Spreizkörper wieder entlastet und die Klemmkraft Fr aufgehoben. Der Leuchtenhalter 6 kann vom Tragarm abgezogen oder auf diesem im Winkel oder seiner Neigung relativ zum Boden eingestellt werden. Durch erneutes Verspannen des Zugankers 15 kann der Reibschluss wieder, wie vorgesehen, hergestellt werden. Dies ermöglicht eine reversible Montage des Leuchtenhalters 6 auf dem Tragarm 3. In Figur 3 und 4 dargestellt weist der als Hohlprofil oder Rohr ausgebildete Tragarm benachbart zum Klemmmittel einen Ausbruch auf, welcher als Auslass einer Kabel- oder Leitungsführung zur Versorgung der Leuchte 7 dient.

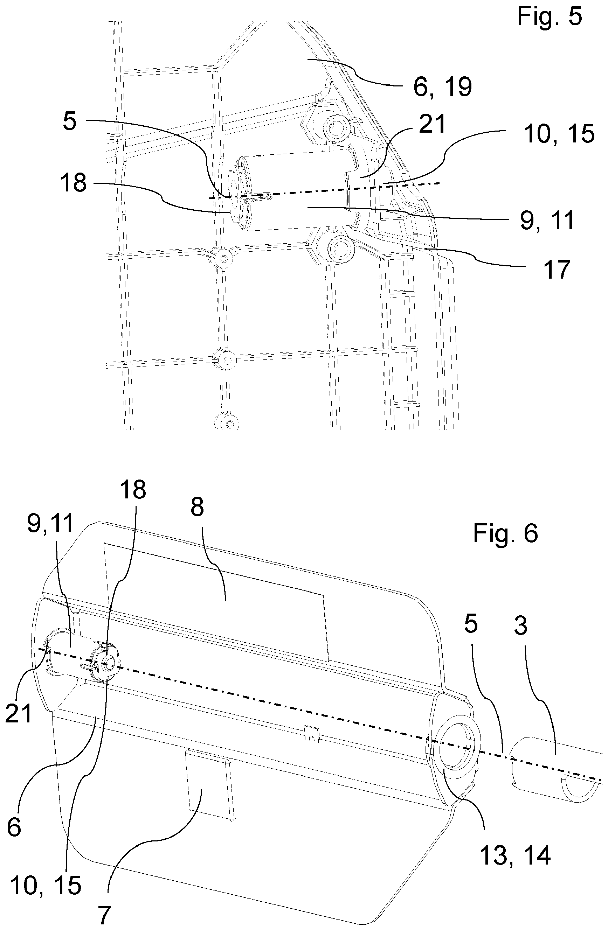

Figur 5 zeigt einen freigestellten Bereich des Leuchtenhalters 6. In die Gehäusehälfte 19 des Leuchtenhalters 6 ist eine Haltelasche 17 formschlüssig eingelegt und wird zusammen mit der nicht dargestellten gegenüberliegenden Gehäusehälfte 20 aus Figur 2 relativ zum Leuchtenhalter 6 fixiert. Auf Höhe des Klemmmittels 9 ist in der Haltelasche eine Ausnehmung oder Bohrung vorgesehen, durch die das Stellmittel 10 in das Klemmmittel 9 eingeführt werden kann. Das Klemmmittel 9 liegt mit seinem rückwertigen Bund 21 an der Haltelasche reibschlüssig an. Im dargestellten Beispiel ist dies ein als Gewindeschraube ausgebildeter Zuganker 15. Durch eine weitere Ausnehmung in der Gehäusehälfte 19 bzw. 20 kann der Zuganker 15 zur Betätigung aus dem Leuchtenhalter 6 herausragen. Im dargestellten Beispiel ist der Zuganker 15 als Innensechskantschaube ausgebildet, welcher von außen mittels eines entsprechenden Sechskantschlüssels betätigt wird. Auf der gegenüberliegenden Seite des als Spreizkörper 11 ausgebildeten Klemmmittels 9 ist ein Gegenhalter 18 angeordnet. Dieser greift mittels Formschlusselementen in korrespondierende Ausnehmungen des Spreizkörpers 11 ein und ist somit zu diesem verdrehgesichert. Weiterhin weist der Gegenhalter 18 ein Innengewinde auf, in welches ein Außengewinde des Zugankers 15 eingreift. Durch Verdrehen des Zugankers 15 schraubt sich dieser in den Gegenhalter 18 ein und bewegt sich somit relativ und axial zum Spreizkörper entlang der Tragarmachse 15. Hierdurch wird der Spreizkörper aufgeweitet oder verpresst und kann sich, wie schon zu Figur 4 dargelegt, gegen die Innenwandung des Tragarmes verpressen. Anstelle des Gegenhalters 18 kann der Spreizkörper 11 auch mit einer sich verjüngenden Ausnehmung oder Bohrung versehen werden, in welche ein Zug- oder Schubanker 15 eindringt und den Spreizkörper 11 in Art eines Dübels derart verformt, dass ebenfalls radial zur Tragarmachse Klemmkräfte Fr entstehen.

Bevorzugt weist das Klemmmittel an seinem Bund weitere Formschlusselemente an seinem Bund 21 auf, welche mit korrespondierenden Ausnehmungen oder Vorsprüngen des Tragarms 3 eine Verdrehsicherung zwischen Tragarm 3 und dem Klemmmittel bilden. Alternativ zum Tragarm 3 können die Formschlusselemente des Klemmmittels 9 auch mit Ausnehmungen oder Vorsprüngen des Leuchtenhalters 6 oder mittelbar mit der Haltelasche zusammenwirken, um den Leuchtenhalter gegenüber dem Klemmmittel 9 gegen Verdrehung zusätzlich zu sichern.

Figur 6 zeigt eine alternative Ausführungsform des Leuchtenhalters 6, an welchem eine Leuchte 7 sowie ein als Warntafel 8 ausgebildetes Warn- oder Anzeigeelement angeordnet sind. Der Leuchtenhalter 6 ist hier als gekantetes oder pressgeformtes Blechteil ausgebildet. An einer Seite des Leuchtenhalters 6 ist, analog zu den bisherigen Ausführungsformen, ein als Spreizkörper 11 ausgebildetes Klemmmittel 9 koaxial zur Tragarmachse 5 angeordnet. Dieser verdeckt eine Ausnehmung oder Bohrung im Leuchtenhalter 6, durch welchen ein Zuganker 15 in das Klemmmittel eingeführt ist. Auf der anderen Seite des Klemmmittels 9 befindet sich der Gegenhalter 18, welcher mit dem Zuganker 15 zusammenwirkend das Stellmittel 10 bildet. Das Klemmmittel weist endseitig einen Bund auf, dessen Rückseite zusammen mit der Blechinnenseite des Leuchtenhalters 6 eine Reibschlussverbindung bildet. Auf der gegenüberliegenden Seite weist der Leuchtenhalter einen größeren Ausbruch auf, in welchen ein Dämpfungsring 13 eingelegt ist. Durch diesen wird von außen der Tragarm 3 zur Montage eingeführt und anschließend auf das Klemmmittel 9 bis an den Bund 21 aufgeschoben. Durch axiales Verspannen des Zugankers 15 mit dem Gegenstück 18 weitet der Spreizkörper auf und verpresst sich mit radialen Klemmkräften Fr gegen die Innenwandung des Tragarms und zugleich den Bund des Klemmmittels 9 gegen die Außenfläche des Leuchtenhalters 6. Umgekehrt ist die Verbindung wieder lösbar. Auch hier sind optional weitere Formschlusselemente am Bund 21 des Klemmmittels 9 angeordnet, welche mit Ausnehmungen oder Vorsprüngen des Tragarmes 3 zusammenwirken und Torsionsmomente zwischen den Komponenten verhindern.

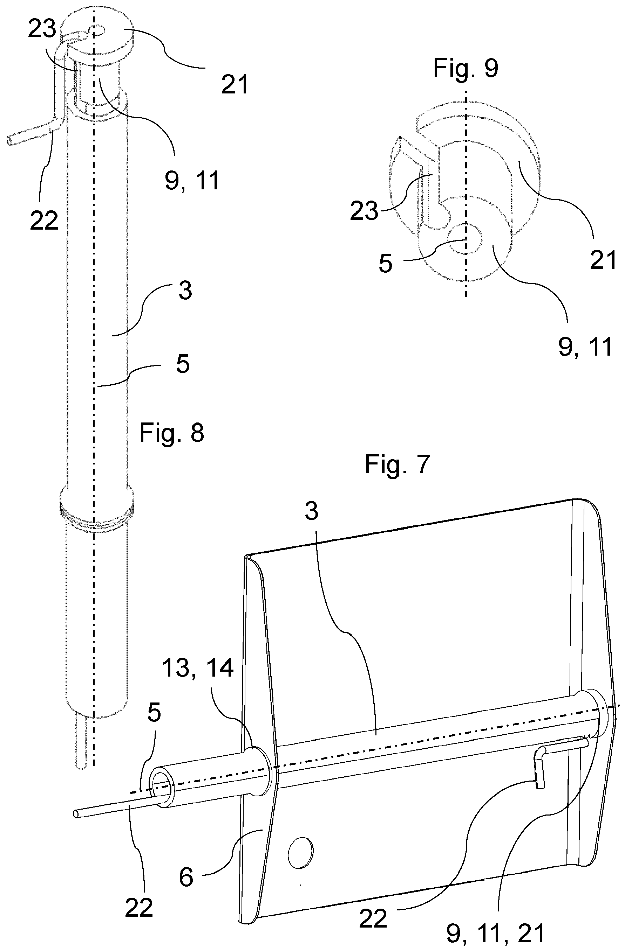

Analog zu Figur 6 und mit gleichen Komponenten und entsprechenden Bezugszeichen ist eine vereinfachte Ausführung des Leuchtenhalters 6 als Blechkantteil ausgebildet. Dabei sind durch den Innenraum des Tragarms 3 eine oder mehrere Leitungen 22 durchgeführt. Diese dienen zur Versorgung der Leuchte 7 oder weiteren montierten Komponenten mit Energie und /oder zur Übertragung von Signalen. Am Ende des Tragarms 3 sind die Leitungen wieder aus dem Tragarm 3 sowie aus dem Klemmmittel 9 ausgeführt. Hierzu weist das als Spreizkörper 11 ausgebildete Klemmmittel 9 innerhalb des Tragarmes 3 sowie am Bund 21 entsprechende Ausnehmungen auf, wie folgend zu Figur 8 und 9 ausgeführt:
In dem dargestellten Tragarm 3 verläuft die Leitung 22. Der Spreizkörper 11 des Klemmmittels 9, welcher in den Tragarm 3 eingeführt wird, ist im Bereich der Leitung 22 mit einer Ausnehmung 23 versehen. Diese erstreckt sich parallel der Tragarmachse 5 durch den Spreizkörper sowie den Bund 21. Durch Verspannen des Spreizkörpers entlang der Tragarmachse 5 weitet sich dieser radial zur Tragarmachse innerhalb des Hohlraumes des Tragarmes 3 auf. Zugleich wird die Leitung innerhalb der Ausnehmung 23 ebenfalls verklemmt und somit vorteilhaft zugentlastet. Zugleich ist entlang der Tragarmachse 5 die Ausnehmung oder Bohrung zur Aufnahme des Zug- oder
Schubankers 15 dargestellt.

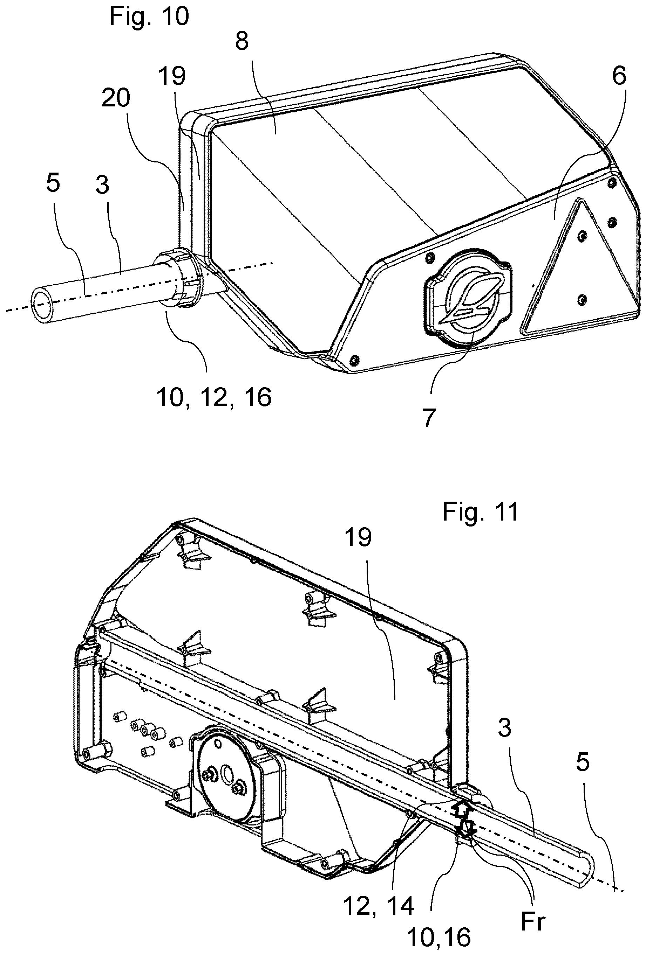

Figur 10 zeigt eine alternative oder zusätzliche Befestigungsausführung eines Leuchtenhalters 6 auf einem Tragarm 3. Der Leuchtenhalter 6 ist in zwei Gehäusehälften 19, 20 aufgeteilt, welche gegeneinander verbunden sind und zusammen mit zumindest einer Leuchte 7 und/oder Warntafel 8 eine Vormontagebaugruppe bilden.

Der Leuchtenhalter 6 ist auf den Tragarm 3 aufgeschoben. Vorzugsweise ist der Tragarm 3 als Rundprofil ausgebildet. Über den Tragarm 3 ist entlang der Tragarmachse 15 ein Klemmring 12 und / oder eine Überwurfmutter 16 aufgeschoben, welche das Stellmittel 10 bilden und mit den Gehäusehälften 19, 20 des Leuchtenhalters 6 verbunden oder verschraubt sind.

Figur 11 zeigt die Situation aus Figur 10 im Querschnitt mit nur einer Gehäusehälfte 19. Der Leuchtenhalter 6 weist endseitig eine als Vorsprung ausgebildete Fixierung 14 auf. Diese Fixierung 14 korrespondiert zur Form des Tragarms 3. Auf die Fixierung 14 ist ein vorzugsweise konisch ausgebildeter und radial zur Tragarmachse 5 verformbarer Klemmring 12 vor- oder aufgeschoben. Alternativ können die Fixierung 14 und / oder der Klemmring 12 integraler Bestandteil der Gehäusehälften 19 und 20 des Leuchtenhalters 6 sein. Die Fixierung weist ein Außengewinde auf, auf welchen die Überwurfmutter aufgeschraubt werden kann. Durch die Aufschraubbewegung erfolgt eine axiale

Zustellung der Überwurfmutter 16 entlang der Tragarmachse 5, wodurch der verformbare Klemmring 12 gegen die Außenwandung des Tragarms mit einer radial zur Tragarmachse 5 wirkenden Klemmkraft Fr verpresst oder angedrückt wird. Hierdurch entsteht eine Kraft- oder Reibschlussverbindung zwischen Tragarm 3 und Leuchtenhalter 6 und sichert diesen gegen axiale Verschiebung oder Verdrehung relativ zum Tragarm 3. Der Klemmring 12 kann als verformbarer C-Ring oder aus einem elastischen Material gebildet werden. Letzteres hat zugleich den Charakter eines Dämpfungsringes 13, welcher ansonsten optional zur Schwingungsdämpfung hinzugefügt werden kann. Endseits des Tragarmes 3 sowie am anderen Ende des Leuchtenhalters 6 kann ein weiterer, vorzugsweise elastischer Spreizkörper 11 mitsamt eines Zug- oder Schubankers 15 unterstützend verbaut werden. Alternativ kann ein integraler Vorsprung des Leuchtenhalters 6 oder seiner Gehäusehälften 19, 20 endseitig in den Tragarm hineinragen und den Leuchtenhalter 6 zumindest radial gegen Bewegung zum Tragarm unterstützen.

Es folgt ein 5 Blatt mit Zeichnungen.

### BEZUGSZEICHENLISTE

| | |
|---|---|
| 1 | landwirtschaftliches Gerät |
| 2 | Leuchtenträger |
| 3 | Tragarm |
| 4 | Querschnittsebene |
| 5 | Tragarmachse |
| 6 | Leuchtenhalter |
| 7 | Leuchte |
| 8 | Warntafel |
| 9 | Klemmmittel |
| 10 | Stellmittel |
| 11 | Spreizkörper |
| 12 | Klemmring |
| 13 | Dämpfungsring |
| 14 | Fixierung |
| 15 | Schub- oder Zuganker |
| 16 | Überwurfmutter, |
| 17 | Haltelasche |
| 18 | Gegenhalter |
| 19 | Gehäusehälfte |
| 20 | Gehäusehälfte |
| 21 | Bund |
| 22 | Leitung |
| 23 | Ausnehmung |
| F | Fahrtrichtung |
| Fr | Klemmkraft |
| | |

## Patentansprüche

1. Leuchtenträger (2), insbesondere für landwirtschaftliche Fahrzeuge oder Geräte (1), mit zumindest einem Tragarm (3), welcher eine Querschnittsebene (4) und eine Tragarmachse (5) aufweist, mit zumindest einem Leuchtenhalter (6), welcher vorzugsweise zur Aufnahme einer oder mehrerer Leuchten (7) und/oder Warntafeln (8) ausgebildet ist, wobei der Leuchtenhalter (6) mit dem Tragarm (3) mittels zumindest eines Klemmmittels (9) verbunden ist, wobei am Klemmmittel (9) mittels zumindest eines Stellmittels (10) eine Klemmkraft (Fr) aufgebracht werden kann,
**dadurch gekennzeichnet,**
**dass** die Klemmkraft (Fr) des Klemmmittels (9) im Wesentlichen innerhalb der oder parallel zur Querschnittsebene (4) wirkend ausgerichtet ist und die die Klemmkraft (Fr) erzeugende Zustellung des Stellmittels (10) koaxial oder parallel zur Tragarmachse (5) oder senkrecht zur Querschnittsebene (4) erfolgt.

2. Leuchtenträger nach Anspruch 1,
**dadurch gekennzeichnet,**
**dass** der Tragarm (3) als Hohlprofil ausgebildet ist.

3. Leuchtenträger nach Anspruch 1 oder 2,
**dadurch gekennzeichnet,**
**dass** der Tragarm (3) als Rundprofil ausgebildet ist.

4. Leuchtenträger nach vorstehenden Ansprüchen,
**dadurch gekennzeichnet,**
**dass** das Klemmmittel (9) ein- oder mehrteilig, insbesondere als Spreizkörper (11) oder als Klemmhülse (12) gebildet ist.

5. Leuchtenträger nach vorstehenden Ansprüchen,
**dadurch gekennzeichnet,**
**dass** das Klemmmittel (9) mit vorzugsweise elastisch verformbaren Teilen versehen oder als solches ausgebildet ist.

6. Leuchtenträger nach vorstehenden Ansprüchen,
**dadurch gekennzeichnet,**
**dass** dem Tragarm (3) und dem Leuchtenhalter (6) an einer von dem Klemmmittel (9) entfernten Position eine weitere Fixierung (14) zugeordnet ist.

7. Leuchtenträger nach vorstehenden Ansprüchen,
**dadurch gekennzeichnet,**
**dass** das Stellmittel (10) als Schub- oder Zuganker (15) ausgebildet ist.

8. Leuchtenträger nach vorstehenden Ansprüchen,
**dadurch gekennzeichnet,**
**dass** das Stellmittel (10) als Überwurfmutter (16) oder Klemmring (12) ausgebildet ist.

9. Leuchtenträger nach vorstehenden Ansprüchen,
**dadurch gekennzeichnet,**
**dass** das Klemmmittel (9) stirnseitig eine Bund- oder Flanschfläche (21) aufweist, welche mit dem Leuchtenhalter (6) und/oder dem Tragarm (3) kraft- oder formschlüssig zusammenwirkend ausgebildet ist.

10. Leuchtenträger nach vorstehenden Ansprüchen,
**dadurch gekennzeichnet,**
**dass** das Klemmmittel (9) mit Formschlusselementen versehen ist, welche mit dem Leuchtenhalter (6) und/oder dem Tragrohr (3) zumindest mittelbar zusammenwirkend als Formschlussverbindung ausgebildet sind.

11. Leuchtenträger nach vorstehenden Ansprüchen,
**dadurch gekennzeichnet,**
**dass** das Klemmmittel (9) eine oder mehrere Ausnehmungen zur Aufnahme und/oder Durchführung von Leitungen (22), insbesondere Kabeln aufweist.
